# EUROPEAN PATENT APPLICATION

(11) **EP 2 030 663 A1**
(43) Date of publication of application: **04.03.2009**
(21) Application number: 08163093.1
(22) Date of filing: 27.08.2008
(51) Int. Cl.: B01D 33/333

(54) **Bandscreen**

(30) Priority: 29.08.2007 GB 0716727
(71) Applicant: The Haigh Engineering Company Ltd, Ross-on-Wye Hereford and Worcester HR9 5NG (GB)
(72) Inventor: Price, Martin, Ross-on-Wye, Hereford and Worcester HR9 (GB); Shepherd, Nigel, Ross-on-Wye, Hereford and Worcester HR9 (GB)
(74) Representative: Greenwood, John David

(57) **Abstract**

A bandscreen comprising a pair of spaced-apart, endless drive chains (4,5), a plurality of spaced-apart screen-supporting members (18) each spanning between the drive chains, and a plurality of screens (10) each of which is held in position by being engaged with, but not attached to, a respective pair of the screen-supporting members (8), only.

## Description

The present invention relates to bandscreens in the form of an endless belt of screens.

These are used, for example, to remove solid material carried by a stream of effluent. The effluent is transported to the interior of the bandscreen, the liquid passes through the screens which retain solid materials down to a size determined by the dimensions of filter holes in the screens.

The bandscreen is generally arranged so that when the belt of screens is rotated the screens are lifted out of the effluent, in turn, to the top of the assembly where the solid material falls off and so is removed for disposal.

In one known arrangement, as exemplified by the bandscreen disclosed by GB-B-2,403,438, there are a pair of spaced-apart endless drive chains to which are bolted a number of screens with no inter-engagement between screens. The chains are driven into rotation and the screens are carried round by the chains. This arrangement allows the ends of screens to move relative to each other to adopt a stepped profile at a selected region which in turn compromises sealing between the panels when positioned to screen the effluent.

In another known arrangement, as exemplified by GB-B-2,407,782, the bandscreen includes a series of screens linked together at their edges by hinge and pin joints to form the endless belt of screens. The belt is rotated by driving the topmost ones of linking pins that link the screens together, the driving force being transmitted between successive screens. This arrangement is said to provide a bandscreen of reduced component count by eliminating the need for a chain drive and the use of the hinged joints provides sealing between adjacent screens whilst providing the relative articulation needed to enable the bandscreen to adopt a suitably tight curve over the driving mechanism whilst being substantially coplanar when in the screening position.
A disadvantage of the latter bandscreen if that the screens must be sufficiently strong to withstand the driving force that is transmitted between screens.

The present invention seeks to provide a bandscreen assembly in which the drive force to rotate the screens is transmitted via a pair of endless drive chains and which has good sealing characteristics between screens. Accordingly, the present invention provides a bandscreen comprising a pair of spaced-apart endless drive chains, a plurality of spaced-apart screen-supporting members each spanning between the drive chains, and a plurality of screens each of which is held in position by being engaged with, but not attached to, a respective pair of screen-supporting members, only.

The screens are held in position without being attached to either the drive chains or the screen-supporting members but solely by engagement with pairs of screen-supporting members which are in turn connected to the chain drives. The engagement of adjacent screens with a common screen-supporting member provides good sealing between adjacent screens. The lack of any attachment between the screens and the chains or screen-supporting members provides that no driving force is transmitted via any one screen to other.

Different configurations of co-operating engaging means can be provided by the screens and screen-supporting means. One example of screen engaging means is a link having a pair of spaced-apart, at least part-cylindrical portions.

A particularly preferred embodiment of bandscreen is one in which each screen engaging means comprises a split cylindrical tube which is removably attached to a plate engaged with the slot. This provides a particularly convenient way of constructing the cylindrical screen panel engaging means.

A convenient form of engagement means for the screen, for use with a cylindrical screen engaging member, is a channel into which it can be placed. The channel may conveniently include two opposed, generally planar side walls which diverge in the direction away from the edge of the screen. Preferably, one of the sidewalls is a flange of a plate which is removably fastened to screen. This arrangement provides a means for quickly and easily removing the plate. One edge of the screen can then be rotated out away from this particular dismantled channel whereupon the screen can be simply removed from the bandscreen assembly as it is not attached to any part of it.

The screen supporting members may include a debris collector which may be in the form of an elongate plate and, preferably angled non-perpendicularly to the general plane of the member. The plate may be provided with a saw-tooth edge.

In another aspect of the invention there is provided a bandscreen comprising a plurality of screens alternating with articulating links, one or more of the links including a debris collector. This configuration may be as in the illustrated bandscreen or with bandscreens of a different construction from that claimed in 1. The debris collector may comprises a plate which may be arcuate and, independently, may have a saw-toothed outer edge.

Embodiments of the invention will now be described, by way of example only, with reference to the accompanying drawings of which:
Figure 1 is a diagrammatic front view of a bandscreen according to the present invention;
Figure 2 is a diagrammatic side view of the bandscreen assembly of Figure 1;
Figure 3 is a diagrammatic exploded isometric front view of the screen-supporting member of the bandscreen of Figure 1;
Figures 4 to 6 are diagrammatic front, end and sectional views, respectively, of the screen-supporting member of Figure 3;
Figure 7 is a diagrammatic isometric view of a screen of the bandscreen of Figure 1;
Figure 8 is a diagrammatic end view of the screen of Figure 5;
Figure 9 is a diagrammatic exploded isometric view of the top section of the bandscreen of Figure 1; and
Figure 10 is a diagrammatic end view of a bandscreen assembly incorporating the bandscreen of Figure 1.

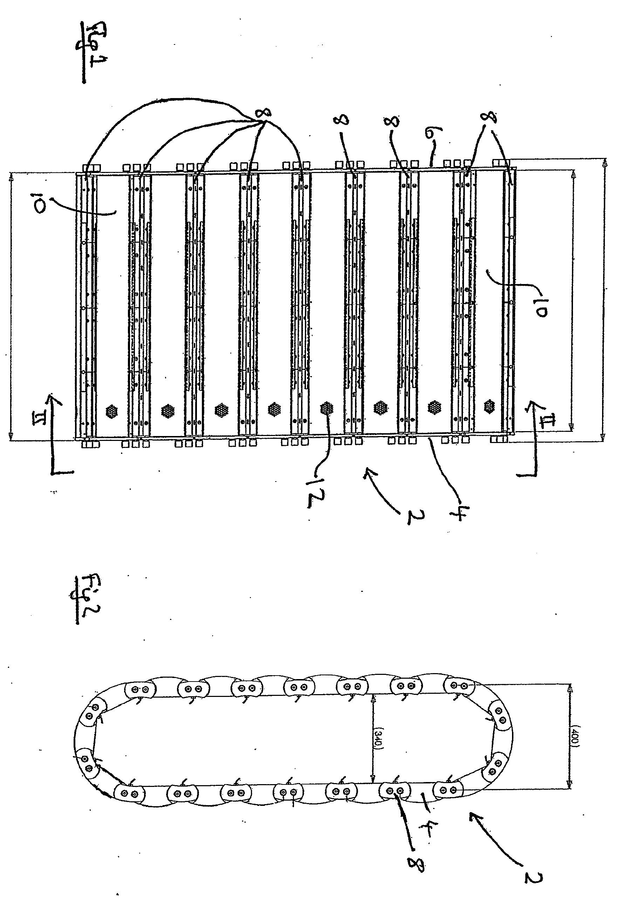

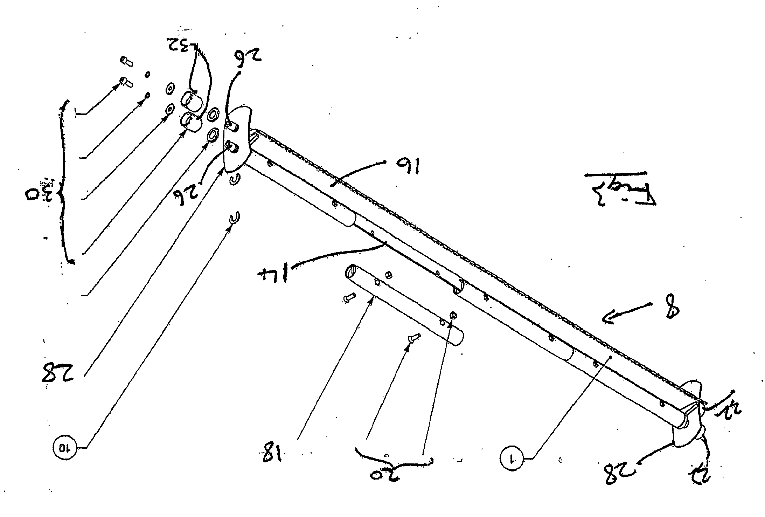

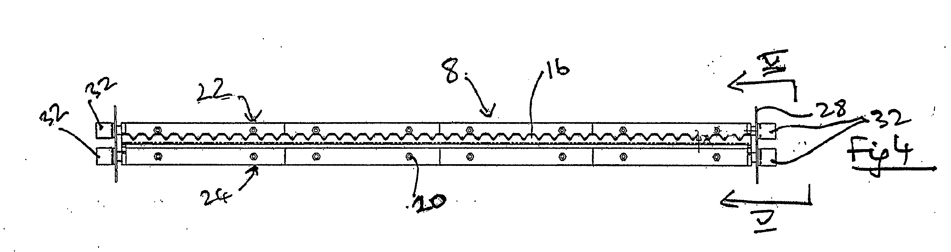

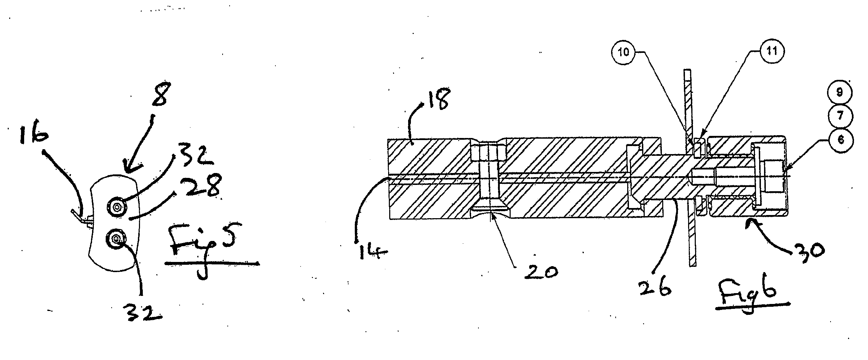

Referring to Figures 1 and 2, there is shown an embodiment of a bandscreen 2 according to the present invention. It comprises a pair of spaced-apart, endless drive chains 4, 6 to which are attached links 8, constituting screen-supporting members, each of which spans the gap between the drive chains 4, 6. Between each consecutive pair of links 8 is a screen 10 each of which is supported in position in the bandscreen 2 by respective pair of links 8 but which, as will be shown in more detail below, are not attached to either the links 8 or the drive chains 4, 6. The screens 10 each have an array of through-holes which extends over substantially all the screen, in known fashion, of which only a small section 1 2 is shown in the Figures for clarity. Referring now to Figures 3 to 6 there is shown in more detail a link 8. It includes an elongate base plate 14 to which is attached an elongate debris collector 16 which extends the width of the plate 14 and stands out from it at an angle as best seen in Figure 5.

Split cylindrical tubes 18 are bolted onto the plate 14 at both sides of the debris collector 16 by bolts 20 to collectively form a pair of screen panel engaging members 22 and 24.

Referring in particular to Figure 6, the split tubes 18 at the ends of the link 8 extend beyond the plate 14. Spigots 26 are attached to the outer ends of the end tubes 18 on which are mounted side plates 28 and roller assemblies 30 including a roller 32.

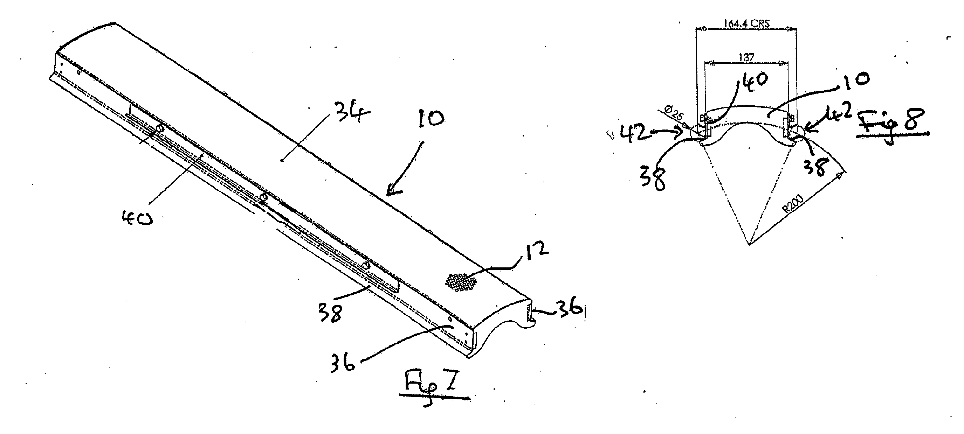

Referring now to Figures 7 and 8, the screen 10 is shown in more detail. It has a perforated elongate screening area 34 substantially covered in perforations of which only a few are shown for clarity reasons. Sidewalls 36 extend vertically downward (in the orientation illustrated) from the screening area along each longitudinal edge and terminate in a lip 30 that extends downwardly and outwardly from vertical sidewall. Bolted on to each sidewall 36 is a bracket 40 which, with the lip 34 and a portion of the sidewall 36 between the lip 38 and the bracket 40, defines a channel 42 (constituting a screen-supporting member engaging means) engageable by the link 8. The diverging form of the sidewalls of the channel 42 means it is engageable with a link 8 without being attached to it.

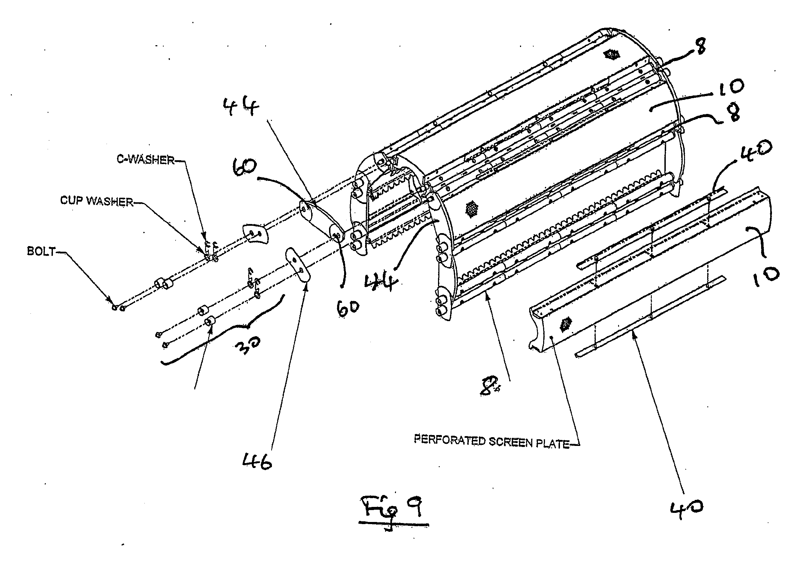

Figure 9 is a part-exploded view of a portion of the bandscreen 2 illustrating how the links 8 and screens 10 are formed into a bandscreen. Each screen 10 is sandwiched between a pair of links 8 with tubular screen engaging members 22 and 24 each engaged with a respective channel 40 of a screen 10. The links 8 are held in position relative to the screens 10 by means of a chain link 44 mounted on pairs of the spigots 26. The space between two spigots 26 at the end of each link 8 is then bridged by a spacer plate 46. The chain links 44 and spacer plates 46 are held in position by the roller assembly 30 which is then bolted into place.

In this embodiment, each chain link 44 is of a plastics or polymer material, eg nylon, with stainless steel insert plates and with whose ends have a recess with circular inner circumferences in which the ends of the stainless steel spacer plates 46 fit to form the articulating chain drives 4 and 6. The chain links 44 and insert plates provide a level surface which seal against sidewalls (not shown) of the bandscreen assembly, in known manner, so effluent can be introduced within the bandscreen and constrained to exit via the screen perforations.

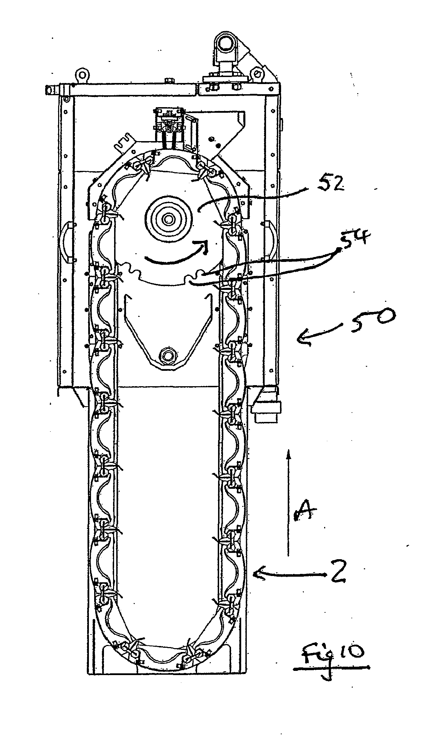

Figure 10 shows the bandscreen 2 in place in a bandscreen assembly 50 which is supported by a pair of motor driven drive wheels (one, only, visible) which have pairs of peripheral indents spaced and dimensioned to engage with the pairs of rollers 32 at each end of each link 8. As the drive wheel 52 is rotated the bandscreen is pulled upwards as indicated by arrow A. As the screens are not attached to the links 8 no upward driving force can pass from one screen to the next.

## Claims

1. A bandscreen including:
a pair of spaced-apart, endless drive chains (4,6);
a plurality of spaced-apart screen-supporting members (8) each spanning between the drive chains (4,6); and
a plurality of screens (10) each of which is held in position by being engaged with, but not attached to, a respective pair of the screen-supporting members (8), only.

2. A bandscreen as claimed in claim 1, in which each screen-supporting member (8) includes a pair of spaced-apart, at least part-cylindrical, screen engaging means.

3. A bandscreen as claimed in claim 2, in which each screen-panel engaging means comprises a split cylindrical tube (18) which is removably attached to a plate engaged with the slot.

4. A bandscreen as claimed in any one of claims 1 to 3, the screen-supporting members (8) including a debris collector (16).

5. A bandscreen as claimed in claim 4, in which the debris collector (16) comprises a plate.

6. A bandscreen as claimed in claim 5 in which the plate (16) is arcuate.

7. A bandscreen as claimed in any one of claims 4 to 6 in which the plate (16) has a saw-toothed outer edge.

8. A bandscreen as claimed in either one of claims 2 and 3 in which each of said screens includes a pair of screen-supporting member engaging means (42) each engageable with a screen engaging means.

9. A bandscreen as claimed in claim 8 in which each screen-supporting member engaging means (42) comprises a channel.

10. A bandscreen as claimed in claim 9, in which each channel (42) includes two opposed, generally planar side walls which diverge in the direction away from screen.

11. A bandscreen as claimed in claim 10, in which one of the sidewalls is a flange of a plate which is removably fastened to screen (10).

12. A bandscreen including a plurality of screens (10) alternating with articulating links (8), one or more of the links including a debris collector (16).

13. A bandscreen as claimed in claim 12, in which the debris collector (16) comprises a plate.

14. A bandscreen as claimed in claim 13, in which the plate (16) is arcuate.

15. A bandscreen as claimed in any one of claims 12 to 14, in which the plate (16) has a saw-toothed outer edge.
